# FASCICULE DE BREVET EUROPEEN

(11) **EP 0 520 900 B1**
(45) Date de publication et mention de la délivrance du brevet: **20.12.1995**
(21) Numéro de dépôt: 92401803.9
(22) Date de dépôt: 25.06.1992
(51) Int. Cl.: B23K 26/00, F01D 5/30, F04D 29/22

(54) **Procédé de fabrication d'une roue à aubes à canaux fermes**
Verfahren zum Herstellen eines Schaufelrads mit geschlossenen Kanälen
Method for manufacturing a bladed rotor with closed channels

(30) Priorité: 27.06.1991 FR 9107966
(43) Date de publication de la demande: 30.12.1992
(73) Titulaire: FRAMATOME, 92400 Courbevoie (FR)
(72) Inventeur: Monteil, Maurice, F-75015 Paris (FR); Millet, François, F-71200 le Creusot (FR)
(74) Mandataire: Bourely, Paul

(56) Documents cités:
- DE-A- 2 036 281
- FR-A- 2 312 671
- FEINWERKTECHNIK & MESSTECHNIK vol. 96, no. 7-8, Juillet 1988, MUNICH,DE pages 305 - 307; P. SEILER: 'SCHWEISSEN MIT YAG- LASER'

## Description

La présente invention concerne un procédé de fabrication de roues à aubes à canaux fermés selon le préambule de la revendication 1. Elle s'applique notamment à la fabrication des roues centrifuges et hélico-centrifuges utilisées dans des pompes ou des compresseurs qui fournissent une énergie à des fluides. Mais elle peut aussi s'appliquer à des roues prévues pour recevoir une énergie apportée par un fluide.

Une telle roue à aubes est constituée d'un métal, par exemple d'acier. Elle comporte un corps de roue solidaire formant une couronne de base munie d'aubes se succédant selon la circonférence autour de l'axe de la roue autour d'un moyeu monté sur l'arbre de la roue. Sur des plateaux supérieurs des aubes on soude un flasque de même diamètre extérieur que la couronne de base. Traditionnellement ce soufre du flasque est effectué manuellement par soudure à l'arc électrique après évidement par fraisage du flasque au droit de chaque aube.

Les différentes étapes de ce procédé ont l'inconvénient d'être difficilement automatisables.

D'autres procédés ont été développés tel que le brasage-diffusion, mais ils nécessitent l'apport d'un métal différent du métal de base qui constitue le corps de roue et le flasque. Un tel apport nuit à la tenue de la roue en milieu corrosif.

Des procédés de soudure par faisceau d'électrons (voir par exemple FR-A1-2 312 671) ont aussi été utilisés mais la liaison qu'ils permettent de réaliser entre les aubes et le flasque n'est que partielle et peut poser des problèmes de tenue dans le temps, essentiellement à la fatigue.

La présente invention a notamment pour but de réaliser de manière automatique une liaison totale et résistante sans emploi de métal d'apport.

Dans ce but elle a pour objet un procédé de fabrication d'une roue à aubes à canaux fermés, selon lequel on fabrique un corps de roue comportant des aubes de cette roue, et on soude un flasque sur ces aubes pour fermer des canaux délimités entre elles, ce procédé étant caractérisé par le fait que l'on soude le flasque sur ces aubes à l'aide d'un crayon de soudure optique qui est alimenté par un faisceau lumineux de puissance guidé par une fibre optique souple et qui parcourt intérieurement ces canaux.

De préférence le soudage du flasque aux aubes se fait en deux étapes. D'abord on réalise une opération de soudure externe du flasque aux aubes dans une partie du flasque qui recouvre ces aubes et qui constitue une couronne de couverture. Cette soudure est effectuée à l'aide d'un faisceau énergétique, qui peut être un faisceau d'électrons, cette soudure étant alors réalisée sous vide. Ce faisceau forme dans le métal une zone de fusion plus profonde que l'épaisseur de la couronne de couverture. Ce faisceau est dirigé vers un point d'impact situé sur la face supérieure de la couronne de couverture. Ce point est positionné au-dessus d'une aube de manière à former une zone de fusion traversant cette couronne et le plateau supérieur de cette aube. Il est positionné à distance des deux arêtes latérales supérieures de l'aube de façon à éviter des coulures de métal à l'intérieur des canaux fermés constitués par le flasque et les aubes.

On réalise ensuite une opération de soudure interne sur ces arêtes qui constituent les bords du plateau supérieur de l'aube et qui sont en contact avec le flasque. On utilise pour cela un crayon de soudure optique alimenté par un faisceau lumineux de puissance guidé par une fibre optique souple. Ce crayon parcourt intérieurement les canaux.

A l'aide des figures schématiques ci-jointes, on va décrire plus particulièrement ci-après, à titre d'exemple, comment la présente invention peut être mise en oeuvre. Lorsqu'un même élément est représenté sur plusieurs figures il y est désigné par un même signe de référence.

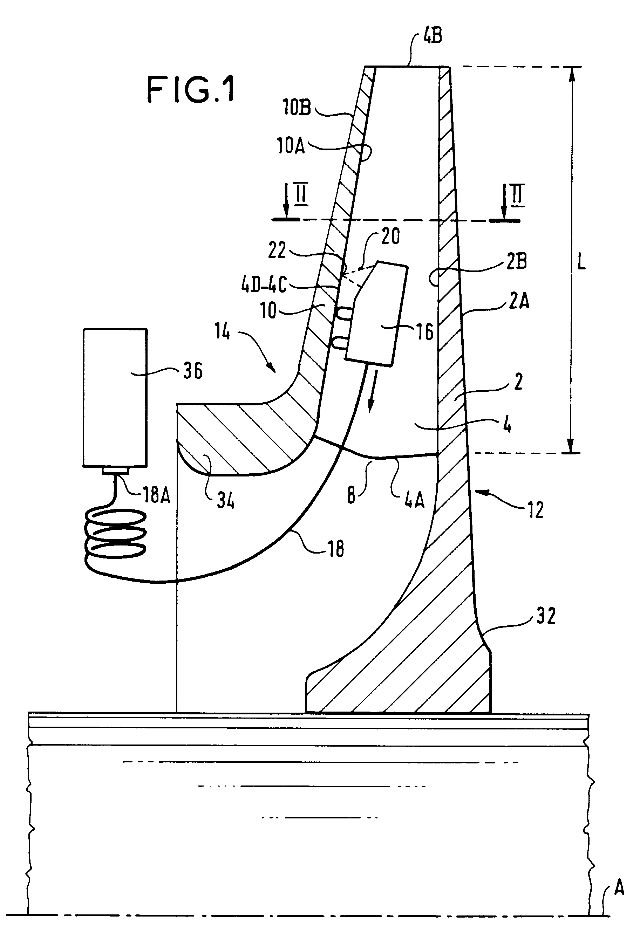

La figure 1 représente une roue à aubes selon l'invention, en section par un plan passant par l'axe de cette roue, au cours de sa fabrication.

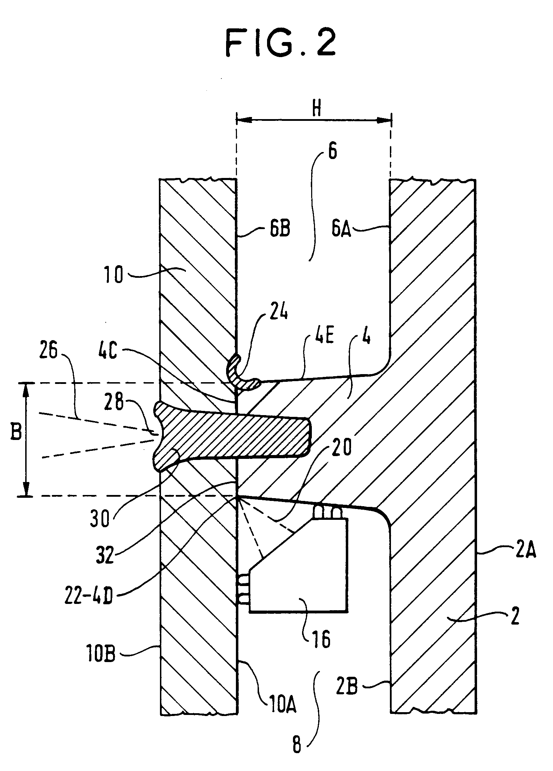

La figure 2 représente cette roue en section transversale selon un plan II-II de la figure 1.

Conformément à ces figures le corps 12 de la roue comporte une couronne de base 2 s'étendant autour d'un axe de roue A.

Si l'axe est orienté verticalement cette couronne présente une face inférieure 2A et une face supérieure 2B. Ce corps comporte en outre des aubes 4 solidaires de cette couronne de base. Ces aubes se succédent selon la circonférence autour de l'axe, faisant saillie sur la face supérieure de cette couronne. La roue comporte par ailleurs une couronne de couverture 10 s'étendant autour de l'axe et présentant une face inférieure 10A et une face supérieure 10B séparées par une épaisseur de cette couronne. La face inférieure de cette couronne 10 est en contact avec des plateaux supérieurs 4C des aubes 4.

Chacune de ces aubes présente une longueur L partant d'une extrémité interne 4A proche de cet axe et allant jusqu'à une extrémité externe 4B plus éloignée de cet axe, une hauteur H allant de la face supérieure 2B de la couronne de base au plateau supérieur 4C de cette aube, et une largeur B comprise entre les deux arêtes latérales supérieures 4D qui constituent les deux bords du plateau supérieur 4C. Les deux surfaces comprises entre ces deux bords et la face supérieure de la couronne de base constituent deux flancs 4E de cette aube. Ces aubes délimitent entre elles une succession de canaux de circulation de fluide 6, 8. Chacun de ces canaux présente un fond 6A constitué par une fraction de la face supérieure 2B de la couronne de base, deux parois latérales constituées par deux flancs en regard de deux aubes 4 contigues sur la circonférence, et un plafond 6B constitué par une partie de la face inférieure 10A de la couronne de couverture.

Les autres parties de cette face inférieure sont fixées sur les plateaux supérieurs (4C) des aubes.

Le procédé de fabrication de cette roue comporte comme connu les opérations suivantes :
- fabrication d'un corps de roue métallique 12 solidaire constituant non seulement la couronne de base 2 et les aubes 4, mais aussi un moyeu prévu pour être monté sur l'arbre de la roue,
- fabrication d'un flasque de roue métallique constituant non seulement ladite couronne de couverture 10 mais aussi un guide d'entrée 34 pour le fluide qui traversera la roue,
- mise en place de ce flasque sur les plateaux supérieurs 4C de ces aubes,
- et soudure de ce flasque à ces plateaux 4C.

Selon la présente invention le procédé de soudage comporte des opérations de soudure interne et de soudure externe.

On commence par solidariser les plateaux supérieurs 4C des aubes 4 les uns après les autres à la face inférieure 10A du flasque par une procédure de soudure externe connue qui nécessite une succession d'opérations de soudure sous vide. Pour cela, on forme un faisceau énergétique d'électrons 26 apte à former dans le métal une zone de fusion plus profonde que l'épaisseur de la couronne de couverture 10. Ce faisceau est dirigé vers un point d'impact 28 situé sur la face supérieure 10B de cette couronne au-dessus d'une aube 4 de manière à former une zone de fusion traversant cette couronne et la surface supérieure 4C de cette aube. Ce faisceau doit rester à distance des arêtes supérieures 4D et des flancs 4E de cette aube pour éviter une coulée parasite de métal liquide. Il existe donc, dans le plateau supérieur, deux bandes latérales qui ne peuvent être fondues. On déplace ce point d'impact sur la longueur L de cette aube de manière à former un cordon de soudure médian 30 fixant le flasque 14 à cette aube. Cette opération est répétée en regard de chaque aube. Il a été trouvé que, en présence de certains efforts appliqués à la roue, ces bandes latérales non soudées 32 jouaient le même rôle que des entailles pratiquées dans une structure monolithique, et qu'elles favorisaient donc la propagation de fissures.

Selon la présente invention on procède ensuite à des opérations de soudure interne pour solidariser plus complètement le flasque aux aubes. Chaque opération de soudure interne comporte elle-même les étapes suivantes.

On introduit un crayon optique 16 dans un canal de circulation de fluide 8. Ce crayon est raccordé optiquement à une sortie d'une fibre optique 18 pour focaliser un faisceau lumineux 20 guidé par cette fibre. Ce faisceau est focalisé en un foyer de soudure 22 extérieur à ce crayon et fixe par rapport à ce crayon. Cette fibre optique 18 est une fibre de transport souple qui présente une entrée 18A à l'extérieur de ce canal.

Puis on positionne ce crayon optique dans ce canal, à l'aide de moyens de guidage, de façon à ce que le foyer 22 soit placé sur l'arête latérale supérieure 4D d'une aube 4 qui constitue une paroi latérale de ce canal 8. On injecte alors un faisceau lumineux de puissance dans l'entrée 18A de cette fibre de transport 18. Ce faisceau est choisi pour fondre le métal du flasque 14 et de cette aube 4 dans une zone de fusion superficielle comportant ce foyer.

On déplace enfin ce crayon optique 16 sur la longueur L de l'aube. Les moyens de guidage maintiennent la position du crayon par rapport à cette arête de manière à déplacer cette zone de fusion et à former un cordon de soudure latéral 24 le long de cette arête.

On répète l'opération de chaque côté de chaque canal. Le faisceau utilisé est de préférence un faisceau énergétique d'un laser YAG 36. Sa puissance peut être suffisamment élevée pour que ce cordon latéral rejoigne le cordon médian.

La présente invention apporte les avantages suivants :
- Absence d'apport de métal autre que celui de base d'où élimination du risque de corrosion,
- Absence de déformations liées aux retraits de soudage et pouvant être importantes dans les techniques manuelles,
- Réduction du temps d'utilisation dans la chambre à vide et automatisation des opérations grâce au faisceau électronique et au faisceau laser,
- Amélioration de la résistance mécanique par suppression de l'effet d'entaille qui apparaît quand on n'utilise que la soudure par faisceau d'électrons. En combinant les deux types de soudure, faisceaux électronique et laser, on assure une solidarisation plus complète du flasque avec les aubes.

## Revendications

1. Procédé de fabrication d'une roue à aubes à canaux fermés, selon lequel on fabrique un corps de roue (12) comportant des aubes (4) de cette roue, et on soude un flasque (14) sur ces aubes pour fermer des canaux (8) délimités entre ces aubes, ce procédé étant caractérisé par le fait que l'on soude ce flasque sur ces aubes à l'aide d'un crayon de soudure optique (16) qui est alimenté par un faisceau lumineux de puissance guidé par une fibre optique souple (18) et qui parcourt intérieurement ces canaux.

2. Procédé de fabrication selon la revendication 1, d'une roue présentant un axe de rotation (A) et comportant
- une couronne de base (2) s'étendant autour de cet axe et généralement horizontale lorsque cet axe est vertical,
- des aubes (4) solidaires de cette couronne de base et se succédant circonférentiellement, en saillie sur cette couronne, en délimitant entre elles une succession de canaux de circulation de fluide (6, 8), chacune de ces aubes ayant une longueur (L) qui s'étend d'une extrémité proche de l'axe jusqu'à une extrémité éloignée de l'axe et ayant aussi une hauteur qui s'étend de la couronne de base jusqu'à un plateau supérieur (4C) de cette aube,
- et une couronne de couverture (10) s'étendant autour de cet axe et présentant une face inférieure (10A) et une supérieure (10B) séparées par une épaisseur de cette couronne, cette face inférieure étant en contact avec les plateaux supérieurs (4C) de ces aubes (4),
- ce procédé de fabrication comportant les opérations suivantes :
- fabrication d'un corps de roue métallique (12) solidaire constituant au moins ladite couronne de base (2) et lesdites aubes (4),
- fabrication d'un flasque (14) métallique constituant au moins ladite couronne de couverture (10),
- et soudure de ce flasque sur les plateaux supérieurs (4C) de ces aubes,
- ce procédé étant caractérisé en ce que ladite opération de soudure du flasque (14) aux aubes (4) comporte une succession de soudures internes réalisées dans ladite succession de canaux de circulation de fluide (6, 8), respectivement, chacune de ces soudures internes comportant elle-même les opérations suivantes :
- introduction d'un crayon optique (16) dans un canal de circulation de fluide (8), ce crayon étant alimenté par une fibre optique souple pour recevoir un faisceau lumineux de puissance (20) et pour focaliser ce faisceau en un foyer de soudure (22) extérieur à ce crayon et mobile avec ce crayon, cette fibre optique étant une fibre de transport munie d'une entrée (18A) à l'extérieur de ce canal pour pouvoir recevoir elle-même un tel faisceau,
- positiomement de ce crayon optique dans ce canal pour placer ledit foyer (22) sur ladite arête latérale supérieure (40) d'une aube (4) délimitant ce canal (8),
- injection d'un faisceau lumineux de puissance dans l'entrée (18A) de cette fibre de transport (18), de manière à fondre le métal du flasque (14) et de cette aube (4) dans une zone de fusion superficielle comportant ce foyer,
- et déplacement de ce crayon optique (16) sur la longueur (L) de cette aube en maintenant la position de ce crayon par rapport à cette arête supérieure de manière à déplacer cette zone de fusion et à former un cordon de soudure latéral (24) le long de cette arête.

3. Procédé selon la revendication 2 caractérisé en ce que ladite opération de soudure du flasque (14) aux aubes (4) comporte aussi une succession d'opérations de soudure externe réalisées à travers la couronne de couverture (10), chacune de ces opérations de soudure externe comportant elle-même les opérations suivantes :
- formation d'un faisceau énergétique (26) apte à former dans le métal une zone de fusion plus profonde que l'épaisseur de cette couronne de couverture (10), ce faisceau étant dirigé vers un point d'impact (28) situé sur la face supérieure (10B) de cette couronne au-dessus d'une aube (4) de manière à former une zone de fusion traversant cette couronne et le plateau supérieur (4C) de cette aube, en restant à distance des arêtes latérales supérieures (4D) de cette aube pour éviter une coulée parasite de métal liquide,
- et déplacement de ce point d'impact (28) sur la longueur (L) de cette aube pour former un cordon de soudure médian (30) fixant le flasque (14) à cette aube (4).

4. Procédé selon la revendication 3, caractérisé en ce que lesdites opérations de soudure externe précèdent lesdites opérations de soudure interne de manière à faciliter le positiomement dudit crayon optique (16).

5. Procédé selon la revendication 3, dans lequel ledit faisceau énergétique est un faisceau électronique (26).

6. Procédé selon la revendication 2, dans lequel ledit corps de roue (12) constitue non seulement la couronne de base (2) et les aubes (4) mais aussi un moyeu de roue (32) pour être fixé à un arbre de la roue.

7. Procédé selon la revendication 6,dans lequel ledit flasque (14) constitue non seulement la couronne de couverture (10) mais aussi un guide d'entrée de fluide (34) pour guider un fluide entrant dans la roue.

8. Procédé de fabrication d'un corps de roue selon la revendication 2, caractérisé en ce que ledit faisceau lumineux de puissance est fourni par un laser YAG (36).

## Claims

1. A method of manufacturing a bladed wheel having closed channels, in which a wheel body (12) is made including blades (4) for said wheel, and a plate (14) is welded onto the blades to close channels (8) delimited between the blades, the method being characterized by the fact that the plate is welded onto the blades by means of an optical weld head (16) which runs along the insides of the channels and which is powered by a power light beam guided by a flexible optical fiber (18).

2. A method according to claim 1 of manufacturing a wheel having an axis of rotation (A) and comprising:
a base disk (2) which extends around said axis and which is generally horizontal when said axis is vertical;
blades (4) fixed to said base disk and following one another circumferentially, projecting from said disk and delimiting between them a succession of fluid flow channels (6, 8), each of the blades having a length (L) extending from an end close to the axis to an end remote from the axis and also having a height extending from the base disk to a top face (4C) of said blade; and
a covering disk (10) extending around said axis and having a bottom face (10A) and a top face (10B) separated by the thickness of said disk, said bottom face being in contact with the top faces (4C) of said blades (4);
the manufacturing method comprising the following operations:
making a one-piece metal wheel body (12) constituting at least said base disk (2) and said blades (4);
making a metal plate (14) constituting at least said covering disk (10); and
welding said plate on the top faces (4C) of said blades;
the method being characterized in that said operation of welding the plate (14) to the blades (4) comprises a succession of internal welding operations performed in said succession of fluid flow channels (6, 8) respectively, each of said internal welding operations itself comprising the following operations:
inserting an optical weld head (16) into a fluid flow channel (8), said head being fed by a flexible optical fiber to receive a power light beam (20) and to focus said beam on a weld focus (22) external to said head and movable with said head, said optical fiber being a transport fiber being provided with an inlet (18A) outside the channel so as to be capable itself of receiving such a beam;
positioning said optical weld head in said channel to place said focus (22) on said top lateral edge (40) of a blade (4) delimiting said channel (8);
injecting a power light beam into the inlet (18A) of said transport fiber (18) so as to melt the metal of the plate (14) and of said blade (4) in a surface melt zone including said focus; and
displacing said optical weld head (16) along the length (L) of said blade while maintaining the position of said head relative to said top edge so as to displace said melt zone and form a lateral weld fillet (24) along said edge.

3. A method according to claim 2, characterized in that said operation of welding the plate (14) to the blades (4) also comprises a succession of external welding operations performed through the covering disk (10), each of said external welding operations itself comprising the following operations:
forming a high energy beam (26) suitable for creating a melt zone in the metal that is deeper than the thickness of said covering disk (10), said beam being directed to an impact point (28) situated on the top face (10B) of said disk overlying a blade (4) in such a manner as to form a melt zone passing through said disk and the top face (4C) of said blade, while remaining at a distance from the top side edges (4D) of said blade to avoid unwanted flows of liquid metal; and
displacing said impact point (28) along the length (L) of said blade to form a central weld fillet (30) fixing the plate (14) to said blade (4).

4. A method according to claim 3, characterized in that said external welding operations precede said internal welding operations, thereby facilitating positioning of said optical weld head (16).

5. A method according to claim 3, in which said high energy beam is an electron beam (26).

6. A method according to claim 2, in which said wheel body (12) constitutes not only the base disk (2) and the blades (4) but also a wheel hub (32) for fixing on a wheel shaft.

7. A method according to claim 6, in which said plate (14) constitutes not only the covering disk (10) but also a fluid inlet guide (34) for guiding a fluid entering the wheel.

8. A method of manufacturing a wheel body according to claim 2, characterized in that said power light beam is provided by a YAG laser (36).

## Patentansprüche

1. Verfahren zum Herstellen eines Schaufelrads mit geschlossenen Kanälen, bei dem ein Radkörper (12) hergestellt wird, der Schaufeln (4) des Rades aufweist, und ein Flansch (14) an diese Schaufeln angeschweißt wird, um zwischen den Schaufeln gebildete Kanäle (8) zu verschließen,
dadurch gekennzeichnet, daß
der Flansch an die Schaufeln mit Hilfe eines Lichtschweißstifts (16) angeschweißt wird, der durch einen durch einen flexiblen Lichtleiter (18) geführten Hochleistungslichtstrahl gespeist wird und sich in den Kanälen bewegt.

2. Verfahren nach Anspruch 1 zur Herstellung eines Rades mit einer Drehachse (A) und
- einen um die Achse, wenn diese vertikal steht, im wesentlichen horizontal verlaufenden Basiskranz (2), und
- mit dem Basiskranz fest verbundenen, in Umfangsrichtung aufeinanderfolgenden, über den Kranz überstehenden Schaufeln (4), die zwischeneinander eine Folge von Fluidzirkulationskanälen (6, 8) begrenzen, von denen jede von einem achsnahen Ende zu einem achsfernen Ende eine Länge (L) und vom Basiskranz bis zu einer oberen Platte (4C) der Schaufel eine Höhe hat,
- einem Abdeckkranz (10), der um die Achse verläuft und eine untere Seite (10A) und eine obere Seite (10B) aufweist, die durch eine Dicke dieses Kranzes getrennt sind, wobei die Unterseite in Kontakt mit den oberen Platten (4C) der Schaufeln (4) ist,
mit den Schritten:
- Herstellen eines einteiligen metallischen Radkörpers (12), der wenigstens den Basiskranz (2) und die Schaufeln (4) bildet,
- Herstellen eines Metallflansches (14), der wenigstens den Abdeckkranz (10) bildet,
- Anschweißen des Flansches an die oberen Platten (4C) der Schaufeln,
dadurch gekennzeichnet, daß
der Schritt des Anschweißens des Flansches (14) an die Schaufeln (4) eine Folge von Innenschweißschritten umfaßt, die jeweils in der Folge von Fluidzirkulationskanälen (6, 8) durchgeführt werden, und von denen jede ihrerseits folgende Schritte umfaßt:
- Einführen eines Lichtschweißstifts (16) in einen Fluidzirkulationskanal (8), wobei des Stift durch einen flexiblen Lichtleiter versorgt wird, um einen Hochleistungslichtstrahl (20) zu empfangen und diesen Strahl auf eine außerhalb des Stiftes liegende und mit diesem Stift bewegliche Schweißstelle (22) zu fokussieren, wobei der Lichtleiter ein Transportleiter ist, der mit einen Eingang (18A) außerhalb des Kanals versehen ist, damit er seinerseits den Strahl aufnehmen kann,
- Positionieren des Lichtschweißstifts im Kanal, um die Schweißstelle (22) auf die obere Seitenkante (40) einer den Kanal (8) begrenzenden Schaufel (4) zu legen,
- Einspeisen eines Hochleistungslichtstrahls in den Eingang (18A) des Transportleiters (18), um das Metall des Flansches (14) und der Schaufel (4) in einem Oberflächenschmelzabschnitt zu schmelzen, der die Schweißstelle umfaßt,
- Bewegen des Lichtschweißstifts (16) auf der Länge (L) der Schaufel unter Beibehaltung der Position dieses Stifts bezüglich dieser oberen Kante, um den Schweißbereich zu verschieben und eine seitliche Schweißnaht (24) entlang der Kante zu bilden.

3. Verfahren nach Anspruch 2, dadurch gekennzeichnet, daß der Schritt des Anschweißens des Flansches (14) an die Schaufeln (4) ferner eine Folge von äußeren Schweißschritten umfaßt, die durch den Abdeckkranz (10) hindurch durchgeführt werden, und von denen jeder seinerseits folgende Schritte umfaßt:
- Bilden eines energiereichen Strahls (26), der geeignet ist, im Metall einen Schmelzbereich zu erzeugen, dessen Tiefe größer als die Dicke des Abdeckkranzes (10) ist, wobei der Strahl auf einen Auftreffpunkt (28) gerichtet wird, der auf der Oberseite (10B) dieses Kranzes oberhalb einer Schaufel (4) liegt, um einen Schweißbereich zu bilden, der den Kranz und die obere Platte (4C) der Schaufel durchquert und von den oberen Seitenkanten (4D) dieser Schaufel Abstand hält, um ein störendes Fließen von flüssigem Metall zu vermeiden,
- Bewegen dieses Auftreffpunkts (28) über die Länge (L) dieser Schaufel, um eine Mittelschweißnaht (30) zu bilden, die den Flansch (14) an der Schaufel (4) befestigt.

4. Verfahren nach Anspruch 3, dadurch gekennzeichnet, daß die äußeren Schweißschritte vor den inneren Schweißschritten stattfinden, um die Positionierung des Lichtschweißstifts (16) zu erleichtern.

5. Verfahren nach Anspruch 3, dadurch gekennzeichnet, daß der energiereiche Strahl ein Elektronenstrahl (26) ist.

6. Verfahren nach Anspruch 2, bei dem der Radkörper (12) nicht nur den Basiskranz (12) und die Schaufeln (4), sondern auch eine Radnabe (32) für die Befestigung an einer Welle des Rades umfaßt.

7. Verfahren nach Anspruch 6, bei dem der Flansch (14) nicht nur den Abdeckkranz (10), sondern auch eine Fluideinführung (34) zum Führen eines in das Rad eintretenden Fluids bildet.

8. Verfahren zur Herstellung eines Rades nach Anspruch 2, dadurch gekennzeichnet, daß der Hochleistungslichtstrahl von einem YAG-Laser (36) geliefert wird.
